# FASCICULE DE BREVET EUROPEEN

(11) **EP 3 558 551 B1**
(45) Date de publication et mention de la délivrance du brevet: **06.01.2021**
(21) Numéro de dépôt: 17804236.2
(22) Date de dépôt: 03.11.2017
(51) Int. Cl.: B07C 3/02

(54) **EQUIPEMENT POUR LE TRI AUTOMATIQUE DE COLIS HORS NORME**
AUTOMATISCHE SORTIEREINRICHTUNG FÜR NICHT DER NORM ENTSPRECHENDE PAKETE
AUTOMATIC SORTING EQUIPMENT FOR EXCEPTION PACKAGES

(30) Priorité: 22.12.2016 FR 1663103
(43) Date de publication de la demande: 30.10.2019
(73) Titulaire: Solystic, 92220 Bagneux (FR)
(72) Inventeur: MIETTE, Emmanuel, 95210 Saint Gratien (FR); CHIROL, Luc, 75016 Paris (FR)
(74) Mandataire: Cabinet Prugneau-Schaub
(86) Numéro de dépôt international: PCT/FR2017/053017
(87) Numéro de publication internationale: WO 2018/115609

(56) Documents cités:
- WO-A1-2014/057182
- WO-A1-2016/067163
- US-A- 5 990 437
- US-B1- 8 919 529

## Description

### Domaine technique

Le domaine de l'invention est celui des centres logistiques de traitement des colis dans lesquels des colis sont réceptionnés, triés et regroupés en vue de leur distribution.

### Technique antérieure

En particulier, l'invention concerne un équipement pour le tri de colis dans un centre logistique tel que décrit dans le document US 8,919,529 B1 comprenant un convoyeur de tri automatisé qui peut être commandé par une unité de contrôle/commande pour déplacer en série des colis le long de sorties de tri et diriger chaque colis vers une certaine sortie de tri en fonction d'une information de tri associée à ce colis qui a été reconnue par la dite unité de contrôle/commande.

Ce convoyeur peut être monté en hauteur sur une plateforme. Chaque sortie de tri peut être équipée d'une chute de tri qui est en forme de rampe inclinée depuis la sortie de tri du convoyeur de tri jusqu'à la plateforme en contrebas du convoyeur de tri.

Les convoyeurs de colis qui sont exploités dans les centres logistiques sont des machines très sophistiquées pour traiter un large spectre de colis. Il peut s'agir de convoyeur à rouleaux, à tapis, à bandes etc...

Les colis sont généralement des paquets, c'est-à-dire de forme générale parallélépipédique, et sur une face du parallélépipède est apposée une adresse de livraison du colis qui sert pour le processus de tri. Par exemple, une image numérique de cette adresse de livraison peut être formée avec un scanner portatif et envoyée à l'unité de traitement de données pour une reconnaissance automatique et l'identification d'une sortie de tri qui correspond à cette adresse de livraison dans le processus de tri automatique. Un code de tri sous forme de code à barres peut également être apposé sur une face du colis.

Toutefois, il existe des colis à trier qui ne peuvent pas être traités automatiquement par ces convoyeurs de tri automatique en raison de leur taille, de leur forme ou de leur poids qui sont incompatibles avec les caractéristiques de fonctionnement de ces convoyeurs.

Ces colis sont appelés colis hors normes. Il peut s'agir par exemple d'un tapis roulé en forme de long cylindre ou encore d'une plaque rigide de grande dimension.

La quantité de colis hors normes à traiter dans un centre logistique peut représenter une proportion d'environ 10% des colis mécanisables passant dans le convoyeur de tri automatique.

Le traitement de ces colis hors normes se fait actuellement essentiellement manuellement. Les Opérateurs en charge du traitement de ces colis hors normes dans un centre logistique doivent les soulever d'un point de chargement et les déplacer vers un point de déchargement ou dépose, par exemple à proximité d'une sortie de tri, ce qui représente une manutention pénible si les colis sont lourds et encombrants notamment.

Par ailleurs, ces colis hors normes qui sont traités manuellement ne peuvent pas suivre en temps réel une réorganisation du plan de tri des colis. Ils suivent donc un processus de tri qui peut être différent de celui des colis mécanisables.

### Exposé de l'invention

Le but de l'invention est donc de remédier à ces différents inconvénients.

A cet effet, l'invention a pour objet un équipement pour le tri de colis dans un centre logistique, comprenant un convoyeur de tri automatisé monté en hauteur sur une plateforme avec des sorties de tri équipées de chutes de tri en forme de rampe inclinée depuis une sortie de tri jusqu'à la plateforme en contrebas, l'équipement comprenant en outre au moins un chariot navette à roulettes apte à transporter des colis hors norme non mécanisables dans le convoyeur de tri, caractérisé en ce que le chariot navette est commandé pour se déplacer d'un point de chargement à un point de déchargement d'un colis hors norme en passant sous les rampes inclinées.

Plus particulièrement selon l'invention, ladite plateforme du centre logistique comprend une première allée de circulation pour le chariot navette qui longe le convoyeur de tri sous les chutes de tri et une seconde allée de circulation pour le chariot navette qui est parallèle à la première allée de circulation, cette seconde allée de circulation étant disposée entre le convoyeur de tri et ladite première allée de circulation sous les chutes de tri de telle sorte que la première allée de circulation étant à plus faible hauteur sous les rampes de sortie de tri que la seconde allée de circulation, le déplacement du chariot navette entre un point de chargement où un colis est chargé sur le chariot navette vide et un point de déchargement où ledit chariot navette est déchargé du colis pour repartir à vide est organisé de telle manière que ledit chariot navette chargé avec le colis hors norme emprunte ladite seconde allée de circulation pour rejoindre ledit point de déchargement et ledit chariot navette qui repart à vide emprunte ladite première allée de circulation pour rejoindre ledit point de chargement.

Selon une particularité de l'équipement selon l'invention, ladite plateforme du centre logistique peut comprendre des allées de traverse pour faire circuler le chariot navette, ces allées de traverse croisant lesdites allées de circulation et s'étendant sous les chutes de tri.

L'idée à la base de l'invention est donc d'automatiser le tri des colis hors normes avec des chariots navettes qui circulent sur des zones de la plateforme peu accessibles pour les Opérateurs et donc mal exploitées afin d'optimiser l'encombrement au sol de l'équipement de tri.

Par chariot navette on entend ici un chariot sur roulettes muni d'un plateau supérieur adapté pour porter un seul colis, ce chariot étant déplacé au sol par un robot navette motorisé autonome en déplacement tel que présenté dans le document de brevet WO2014/057182.

Selon l'invention, l'adresse de destinataire en clair apposée sur un colis hors normes ou encore une indication de tri correspondant à cette adresse de destinataire par exemple sous la forme d'un code barres, peut être saisie lors du chargement du colis sur le chariot navette, par exemple par une caméra qui forme une image numérique de l'adresse de destinataire ou du code barres, cette image étant transmise ensuite à l'unité de contrôle/commande pour une reconnaissance automatique et une exploitation pour le tri automatique de ce colis hors normes parmi les autres colis mécanisables.

L'équipement selon l'invention peut avantageusement présenter encore les particularités suivantes :
- le chariot navette comprend d'une part un chariot à roulettes avec un plateau adapté pour porter un colis hors norme et d'autre part un robot navette motorisé adapté pour accoster ledit chariot et l'entrainer en déplacement;
- le chariot à roulettes peut être muni d'un plateau pour porter un colis hors norme qui comporte une partie centrale en forme de gouttière à section transversale en V et deux parties latérales de part et d'autre de la partie centrale et qui s'étendent dans un même plan horizontal;
- le corps du plateau peut être formé par deux peignes disposés en opposition, les dents des peignes s'étendant parallèlement les unes aux autres de la partie centrale du corps respectivement vers le bord des parties latérales.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue schématique en plan de la plateforme d'un centre logistique de tri de colis.
- la figure 2 est une vue schématique en coupe de la plateforme de la figure 1.
- la figure 3 illustre un robot navette avec un chariot à roulettes.
- la figure 4 illustre schématiquement en vue de côté du plateau du chariot à roulettes.
- la figure 5 illustre schématiquement en vue de devant du plateau du chariot à roulettes.
- la figure 6 illustre de façon schématique une vue de dessus du plateau du chariot à roulettes.

### Description des modes de réalisation

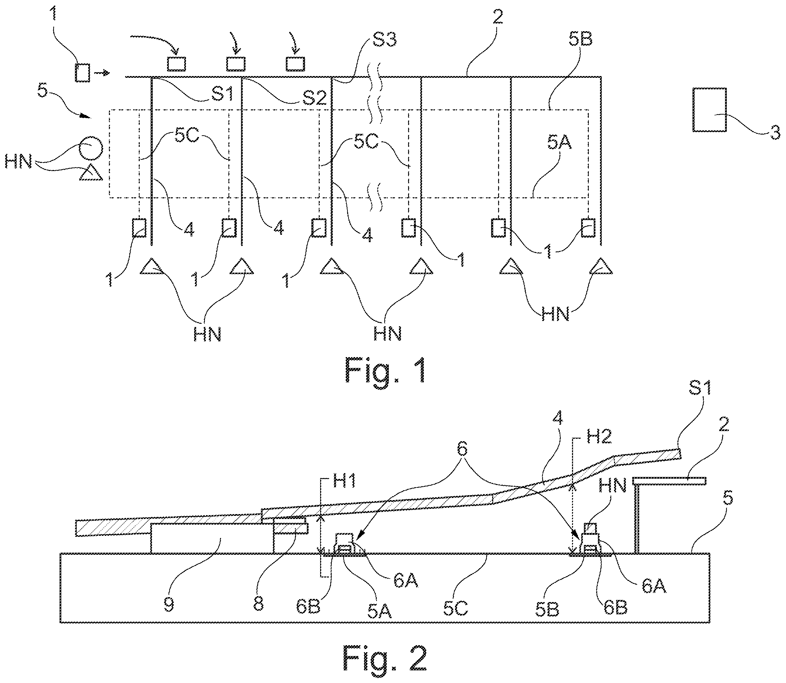

Sur la figure 1, on a illustré très schématiquement la topologie d'un centre logistique de tri de colis 1 avec un convoyeur de tri 2 et des sorties de tri ici S1,S2,S3.

On a représente ici qu'un petit nombre de sorties de tri sachant qu'il peut y avoir plusieurs dizaines ou centaines de sorties de tri desservies par le convoyeur.

Le convoyeur de tri peut être un convoyeur à bande, à rouleaux, à tapis ou autre alimenté ici en colis mécanisables depuis une de ses extrémités (à gauche sur la figure 1) et dans lequel les colis 1 sont déplacés en série à plat.

Le convoyeur de tri est piloté par une unité de contrôle/commande 3 adaptée pour reconnaître automatiquement l'adresse de destinataire d'un colis et en fonction d'un plan de tri orienter ce colis vers la sortie de tri correspondante pour trier ce colis.

La reconnaissance automatique d'adresse peut se faire par exemple à partir d'une image numérique de l'adresse de destinataire apposée sur le colis qui a été saisie lors de l'introduction du colis 1 dans le convoyeur de tri 2.

Comme illustré sur les figures 1 et 2, le convoyeur de tri 2 est ici monté en hauteur sur la plateforme 5 du centre logistique et chaque sortie de tri comme SI est munie d'une chute de tri 4 sous la forme d'une rampe inclinée depuis la sortie de tri SI du convoyeur de tri jusqu'à la plateforme en contrebas du convoyeur de tri.

L'équipement de tri selon l'invention est conçu pour trier à flux réduit des colis non mécanisables appelés colis hors norme référencés HN et illustrés sur la figure 1 par un triangle et un cercle à la différence des colis mécanisables 1 représentés par un rectangle. Ces colis hors norme HN sont par exemple des colis qui présentent une forme, un poids ou des dimensions incompatibles avec les caractéristiques de fonctionnement du convoyeur 2. Il peut s'agir de cylindres, plaques, rouleaux etc...

Les colis hors normes HN qui arrivent au point d'entrée PE du centre logistique (à gauche sur la figure 1) sont ici chargés un par un par un Opérateur sur un chariot navette 6.

L'adresse de destinataire du colis hors norme peut être scannée par l'Opérateur et envoyée à l'unité de contrôle/commande 3 pour une détermination automatique d'une sortie de tri correspondante suivant un plan de tri des colis mécanisables.

Suite à quoi l'unité de contrôle/commande est apte à commander à distance le déplacement, sur la plateforme 5 du centre logistique, du chariot navette 6 chargé avec le colis hors norme HN pour le diriger ici vers la sortie de tri du convoyeur de tri qui correspond à cette adresse de destinataire dans le plan de tri des colis mécanisables.

Plus particulièrement selon l'invention et comme illustré sur les figures 1 et 2, la plateforme 5 du centre logistique comprend une première allée de circulation 5A pour les chariots navettes 6 qui longe le convoyeur de tri 2 en passant sous les chutes de tri 4 et une seconde allée de circulation 5B pour les chariots navettes 6 qui est parallèle à la première allée de circulation 5A. Comme illustré sur la figure 1, les allées de circulation 5A,5B croisent sensiblement perpendiculairement les chutes de tri.

L'allée de circulation 5B est disposée entre le convoyeur de tri 2 et l'allée de circulation 5A sous les chutes de tri de telle sorte que l'allée de circulation 5A est à plus faible hauteur H1 sous les rampes de sortie de tri que l'allée de circulation 5B, la hauteur sous rampe de l'allée de circulation 5B est indiquée par H2.

Selon l'invention, l'unité de contrôle/commande 3 est agencée pour commander le déplacement des chariots navettes 6 sur les allées de circulation 5A et 5B entre le poste de chargement à l'entrée PE du centre logistique où un colis est chargé sur un chariot navette vide et point de déchargement, ici à l'extrémité libre d'une chute de tri 4, où le chariot navette 6 est déchargé du colis pour repartir à vide vers le point de chargement à l'entrée PE.

Plus particulièrement, le déplacement des chariots navette 6 est commandé de telle manière à ce que le robot navette 6 chargé avec un colis hors norme HN emprunte l'allée de circulation 5B où il y a la plus grande hauteur H2 sous rampe pour rejoindre la chute de tri et de telle manière à ce que le robot navette qui repart à vide emprunte l'allée de circulation 5A de plus faible hauteur H1 sous rampe pour rejoindre le point de chargement à l'entrée PE.

Comme visible sur la figure 1, les deux allées de circulation sont croisées par des allées de traverses 5C empruntées tant à l'allée qu'au retour par les chariots navettes 6 ce qui autorise un cheminement optimisé des chariots navettes sur la plateforme 5. Sur la figure 1, on a illustré ces allées de traverse 5C en trait interrompu longeant les chutes de tri mais il faut considérer que ces allées de traverse 5C s'étendent selon l'invention en-dessous des chutes de tri pour optimiser l'emprise au sol de l'équipement.

A titre d'exemple, pour aller vers la chute de tri de la sortie de tri S3, le chariot navette suit l'allée 5B le long du convoyeur 2 jusqu'à la sortie S3, puis tourne à 90° et longe la chute de la sortie S3 sur l'allée de traverse 5C jusqu'à un point de déchargement du colis hors normes manuellement par un Opérateur ou de façon automatique.

Ensuite, le chariot navette 6 à vide remonte l'allée de traverse 5C, puis tourne à 90° pour remonter l'allée de circulation 5A jusqu'au point d'entrée PE où il pourra de nouveau être chargé avec un colis hors norme HN.

Cet agencement selon l'invention contribue à automatiser le tri des colis hors normes tout en optimisant l'emprise au sol par l'équipement de tri en centre logistique.

La figure 2, est une vue en coupe transversale de la figure 1 le long d'une chute de tri.

On a illustré sur la figure 2, les allées de circulation 5A,5B,5C.

La figure 2 montre de façon très schématique un chariot navette 6 placé sur l'allée de circulation 5B qui est chargé avec un colis hors normes HN.

Sur l'allée de circulation 5A, on a illustré un autre chariot navette 6 sans colis hors norme. Selon l'invention, plusieurs chariots navettes peuvent circuler en même temps sur les allées de circulation 5A, 5B et 5C de la plateforme du centre logistique pour augmenter le débit de traitement des colis hors normes avec les chariots navettes 6.

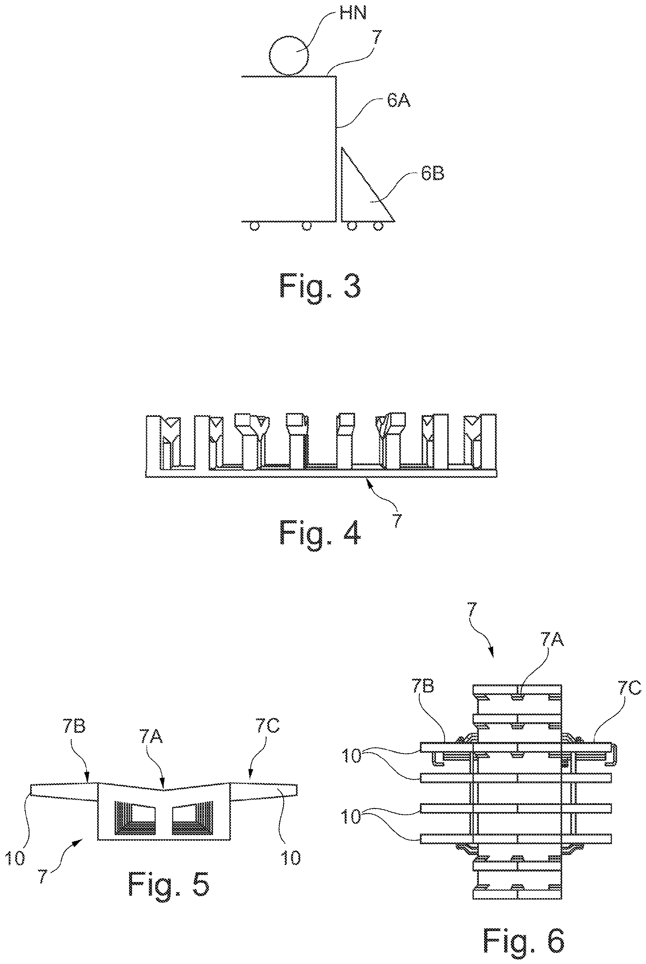

Un chariot navette selon l'invention peut comprendre un chariot sur roulette indiqué par 6A sur les figures 2 et 3 muni d'un plateau 7 adapté pour supporter un colis hors normes HN et un robot navette à roulettes motorisées 6B qui est apte à se déplacer sur le sol de la plateforme en étant commandé à distance sans fil par l'unité de contrôle/commande 5.

Un exemple de réalisation d'un robot navette adapté pour un chariot à roulettes est plus particulièrement décrit dans le document de brevet WO2014/057182. Dans ce document, il est indiqué comment le robot navette est adapté pour accoster le chariot à roulettes de façon à l'entraîner en déplacement sur la plateforme 5 et aussi également pour se désolidariser de celui-ci de façon à le laisser sur place.

Le plateau 7 du chariot navette est montré plus en détail sur les figures 4 à 6.

Comme visible sur ces figures, le plateau 7 a une forme conçue pour pouvoir porter différents colis hors normes de différentes formes : cylindres allongés ou de grand diamètre, plaques, parallélogrammes etc...

Le plateau 7 comporte une partie centrale 7A en forme de gouttière à section transversale en V et deux parties latérales 7B,7C de part et d'autre de la partie centrale et qui s'étendent dans un même plan horizontal.

La partie centrale 7A en forme de gouttière est adaptée pour porter des colis cylindrique. Les deux parties latérales 7B,7C planes sont adaptées pour porter des colis plats de grandes dimensions.

La gouttière de la partie centrale 7A est disposée en-dessous du plan horizontal des parties latérales 7B,7C de sorte qu'un colis plat de grande dimension reposant sur le plan des parties latérale chevauche la gouttière de la partie centrale.

Comme visible plus particulièrement sur les figures 4 et 6, le corps des parties centrale et latérales 7A,7B,7C comprend des membrures parallèles formant deux peignes disposés en opposition, les dents des peignes s'étendant parallèlement les unes aux autres de la partie centrale 7A respectivement vers le bord des parties latérales 7B,7C.

Le corps de la partie centrale 7A peut avoir une structure ajourée comme illustré sur la figure 5.

Les dents de peigne peuvent être plus courtes sur les extrémités des côtés latéraux qu'au milieu comme visible sur la figure 6.

Sur la figure 6, le plateau comporte sur chaque côté latéral huit dents de peigne dont quatre au milieu sont de plus grande longueur. Ces dents de peigne de plus grande longueur définissent les plans horizontaux des parties latérales.

A l'extrémité des chutes 4, on peut prévoir un convoyeur à rouleaux comme représenté par la référence 8 sur la figure 2 pour recevoir les colis hors normes déchargés des chariots navettes et qui alimente un bac de stockage 9 disposé à l'extrémité de la chute de tri 4 pour recueillir aussi les colis mécanisables 1 amenés par cette chute de tri 4.

Dans le bac de stockage 9, les colis mécanisables et les colis hors normes sont donc regroupés pour être chargés ensembles en camion ce qui permet une rationalisation de la manutention des colis en sortie du centre logistique.

## Revendications

1. Equipement pour le tri de colis dans un centre logistique, comprenant un convoyeur de tri automatisé (2) monté en hauteur sur une plateforme avec des sorties de tri (S1,S2,S3) équipées de chutes de tri (4) en forme de rampe inclinée depuis une sortie de tri jusqu'à la plateforme en contrebas, l'équipement comprenant en outre au moins un chariot navette à roulettes (6) apte à transporter des colis hors norme (HN) non mécanisables dans le convoyeur de tri, **caractérisé en ce que** le chariot navette est commandé pour se déplacer d'un point de chargement (PE) à un point de déchargement d'un colis hors normes en passant sous les rampes inclinées.

2. Equipement selon la revendication 1, **caractérisé en ce que** ladite plateforme du centre logistique comprend une première allée de circulation (5A) pour le chariot navette qui longe le convoyeur de tri sous les chutes de tri et une seconde allée de circulation (5B) pour le chariot navette qui est parallèle à la première allée de circulation, cette seconde allée de circulation étant disposée entre le convoyeur de tri et ladite première allée de circulation sous les chutes de tri de telle sorte que la première allée de circulation étant à plus faible hauteur sous les rampes de sortie de tri que la seconde allée de circulation, le déplacement du chariot navette entre un point de chargement (PE) où un colis est chargé sur le chariot navette vide et un point de déchargement où ledit chariot navette est déchargé du colis pour repartir à vide est organisé de telle manière à ce que ledit chariot navette chargé avec le colis hors normes emprunte ladite seconde allée de circulation pour rejoindre ledit point de déchargement et ledit chariot navette qui repart à vide emprunte ladite première allée de circulation pour rejoindre ledit point de chargement.

3. Equipement de tri selon la revendication 2, **caractérisé en ce que** ladite plateforme du centre logistique comprend des allées de traverse (5C) pour faire circuler le chariot navette (6), ces allées de traverse croisant lesdites allées de circulation (5A,5B) et s'étendant sous les chutes de tri (4).

4. Equipement de tri selon l'une des revendications précédentes, **caractérisé en ce que** le chariot navette (6) comprend d'une part un chariot à roulettes (6A) avec un plateau (7) adapté pour porter un colis hors norme (HN) et d'autre part un robot navette motorisé (6B) adapté pour accoster ledit chariot et l'entrainer en déplacement.

5. Equipement de tri selon l'une des revendications précédentes, **caractérisé en ce que** le chariot à roulettes est muni d'un plateau (7) pour porter un colis hors norme (HN) qui comporte une partie centrale (7A) en forme de gouttière à section transversale en V et deux parties latérales (7B,7C) de part et d'autre de la partie centrale et qui s'étendent dans un même plan horizontal.

6. Equipement de tri selon la revendication 5, **caractérisé en ce que** le corps du plateau comprend des membrures formant deux peignes disposés en opposition, les dents des peignes s'étendant parallèlement les unes aux autres de la partie centrale (7A) du corps respectivement vers le bord des parties latérales (7B,7C).

## Patentansprüche

1. Sortiereinrichtung für Packstücke in einem Logistikzentrum, umfassend einen automatisierten Sortierförderer (2), der angehoben auf einer Plattform mit Sortierausgängen (S1, S2, S3) aufgebaut ist, die mit rampenförmig von einem Sortierausgang bis zu der weiter unten liegenden Plattform geneigten Sortierschütten (4) ausgerüstet sind, wobei die Einrichtung ferner mindestens ein Flurförderzeug mit Rollen (6) umfasst, das in der Lage ist, nicht normgerechte Packstücke (HN), die in dem Sortierförderer nicht mechanisch verarbeitbar sind, zu transportieren,
**dadurch gekennzeichnet,**
**dass** das Flurförderzeug gesteuert ist, um sich von einem Beladepunkt (PE) zu einem Entladepunkt eines nicht normgerechten Packstücks zu verlagern und dabei unter den geneigten Rampen hindurchzufahren.

2. Einrichtung nach Anspruch 1, **dadurch gekennzeichnet, dass** die Plattform des Logistikzentrums eine entlang des Sortierförderers unter den Sortierschütten verlaufende erste Fahrspur (5A) für das Flurförderzeug und eine zu der ersten Fahrspur parallele zweite Fahrspur (5B) für das Flurförderzeug umfasst, wobei die zweite Fahrspur zwischen dem Sortierförderer und der ersten Fahrspur unter den Sortierschütten derart angeordnet ist, dass die erste Fahrspur sich auf geringerer Höhe unter den Sortierausgangsrampen als die zweite Fahrspur befindet, wobei die Verlagerung des Flurförderzeugs zwischen einem Beladepunkt (PE), an dem ein Packstück auf das leere Flurförderzeug geladen wird, und einem Entladepunkt, an dem das Flurförderzeug von dem Packstück befreit wird, um wieder leer loszufahren, derart organisiert ist, dass das mit den nicht normgerechten Packstücken beladene Flurförderzeug die zweite Fahrspur zum Erreichen des Entladepunktes einschlägt und das Flurförderzeug, das leer wieder fortfährt, die erste Fahrspur zum Erreichen des Beladepunktes einschlägt.

3. Sortiereinrichtung nach Anspruch 2, **dadurch gekennzeichnet, dass** die Plattform des Logistikzentrums Querspuren (5C) umfasst, um das Flurförderzeug (6) verfahren zu lassen, wobei die Querspuren die Fahrspuren (5A, 5B) kreuzen und sich unter den Sortierschütten (4) erstrecken.

4. Sortiereinrichtung nach einen der vorhergehenden Ansprüche, **dadurch gekennzeichnet, dass** das Flurförderzeug (6) einerseits einen Laufwagen mit Rollen (6A) mit einer zum Tragen des nicht normgerechten Packstücks (HN) ausgebildeten Platte (7) und anderseits einen zum Ankoppeln an den Laufwagen und zum Antreiben desselben in Verlagerung ausgebildeten motorisierten Zuführroboter (6B) umfasst.

5. Sortiereinrichtung nach einem der vorhergehenden Ansprüche, **dadurch gekennzeichnet, dass** der Laufwagen mit Rollen mit einer Platte (7) zum Tragen eines nicht normgerechten Packstücks (HN) versehen ist, die einen zentralen Bereich (7A) in Gestalt einer Rinne mit V-förmigem Querschnitt und zwei sich in einer selben horizontalen Ebene erstreckende seitliche Bereiche (7B, 7C) einerseits und andererseits des zentralen Bereichs umfasst.

6. Sortiereinrichtung nach Anspruch 5, **dadurch gekennzeichnet, dass** der Korpus der Platte ferner Rippen umfasst, die zwei gegenüberliegend angeordnete Kämme bilden, wobei die Zinken der Kämme sich jeweils parallel zueinander und von dem zentralen Bereich (7A) des Korpus jeweils zu dem Rand der seitlichen Bereiche (7B, 7C) erstrecken.

## Claims

1. Equipment for sorting parcels in a logistics center, said equipment comprising an automated sorting conveyor (2) mounted at a height over a platform and with sorting outlets (S1, S2, S3) equipped with sorting chutes (4) in the form of ramps sloping downwards from respective sorting outlets to the platform below, the equipment further comprising at least one shuttle trolley (6) mounted on wheels and suitable for transporting non-standard parcels (HN) that are not machine-sortable on the sorting conveyor, said equipment being **characterized in that** the shuttle trolley is controlled so as to move a non-standard parcel from a loading point (PE) to an unloading point while passing under the ramps.

2. Equipment according to claim 1, **characterized in that** said platform of the logistics center has a first travel aisle (5A) for the shuttle trolley that extends alongside the sorting conveyor and under the sorting chutes, and a second travel aisle (5B) for the shuttle trolley that extends parallel to the first travel aisle, said second travel aisle being disposed between the sorting conveyor and said first travel aisle under the sorting chutes in such a manner that since the first travel aisle has less headroom under the sorting outlet ramps than the second travel aisle, the movement of the shuttle trolley from a loading point (PE) at which a parcel is loaded onto the empty shuttle trolley and an unloading point at which said parcel is unloaded from said shuttle trolley and from which said shuttle trolley returns empty is organized in such a manner that said shuttle trolley loaded with the non-standard parcel follows said second travel aisle to reach said unloading point, and said shuttle trolley that returns empty follows said first travel aisle to reach said loading point.

3. Sorting equipment according to claim 2, **characterized in that** said platform of the logistics center has cross-aisles (5C) along which the shuttle trolley (6) can travel, said cross-aisles crossing said travel aisles (5A, 5B) and extending under the sorting chutes (4).

4. Sorting equipment according to any preceding claim, **characterized in that** the shuttle trolley (6) comprises firstly a trolley (6A) mounted on wheels and having a deck (7) adapted to carry a non-standard parcel (HN), and secondly a motor-driven shuttle robot (6B) adapted to dock with said trolley and to move it.

5. Sorting equipment according to any preceding claim, **characterized in that** the trolley mounted on wheels is provided with a deck (7) for carrying a non-standard parcel (HN), which deck has a central portion (7A) in the shape of a trough of V-shaped cross-section, and two side portions (7B, 7C) on either side of the central portion and that extend in a common horizontal plane.

6. Sorting equipment according to claim 5, **characterized in that** the body of the deck comprises framework members forming two combs disposed back-to-back, the teeth of the combs extending parallel to one another from the central portion (7A) of the body to the edges of respective ones of the side portions (7B, 7C).
